# EUROPEAN PATENT APPLICATION

(11) **EP 0 944 253 A1**
(43) Date of publication of application: **22.09.1999**
(21) Application number: 99302029.6
(22) Date of filing: 16.03.1999
(51) Int. Cl.: H04N 5/445

(54) **Epg receiving apparatus and method and providing medium**

(30) Priority: 17.03.1998 JP 6681498
(71) Applicant: SONY CORPORATION, Tokyo 141 (JP)
(72) Inventor: Okura, Yukiko, Shinagawa-ku, Tokyo (JP); Nashida, Tatsushi, Shinagawa-ku, Tokyo (JP); Okumura, Kazumasa, Shinagawa-ku, Tokyo (JP); Kohno, Tetsuya, Shinagawa-ku, Tokyo (JP); Hanai, Tomoyuki, Shinagawa-ku, Tokyo (JP); Nishina, Yasutomo, Shinagawa-ku, Tokyo (JP)
(74) Representative: Smith, Samuel Leonard

(57) **Abstract**

A viewer selects a program to be reserved from an EPG and depresses a decision button of a remote controller. Then, if the viewer is viewing a program on a different channel, a reminder function operates immediately before the broadcast hour of the reserved program, whereby a message to the effect that the broadcast hour of the reserved program is coming is displayed in a bottom area of the screen. If the viewer wants to view the reserved program, he depresses the decision button of the remote controller, whereupon switching is made to a picture of the reserved program.

## Description

The present invention relates to an EPG receiving apparatus and method and a providing medium and, more particularly, to an EPG receiving apparatus and method and a providing medium in which in a case where a viewer has given a reminder to a future program and is viewing a program on a different channel immediately before an upcoming start of broadcast of the future program, the viewer is informed of it in the form of a display on a monitor.

In recent years, in Japan and elsewhere, digital satellite broadcast has started and it has become possible to provide programs on as many as 100 channels or more. As the number of channels increases in this manner, it becomes more inconvenient for a viewer to select a desired program properly from a number of programs. In view of this, EPG (electronic program guide) data is transmitted separately from information of primary programs so as to allow viewers to select a desired program based on the EPG.

However, in the conventional digital satellite broadcast, an EPG is displayed so as to be superimposed on a picture that is transmitted from a broadcasting station and hence most of the picture is covered with the EPG. This causes a problem that the picture is hard to recognize when a viewer performs a manipulation on the EPG.

Since EPG data corresponding to programs of about one week of all channels is transmitted via several transponders that are incorporated in a satellite, there is a problem that a temporary blackout may occur when a viewer performs a manipulation on an EPG.

There is another problem that in the on/off timer function of the conventional digital satellite broadcast, a television receiver automatically switches to a preset channel upon coming of preset time and hence a viewer cannot continue to watch a program on a channel that is currently selected.

The present invention has been made in view of the above circumstances, and an object of the invention is therefore to allow, by means of a reminder function, a viewer to judge whether to make channel switching by informing him of an upcoming start of broadcast of a preset program in the form of a display on a television receiver immediately before its start. Another object of the invention is to make the reminder function available for a plurality of channels, to thereby enable double booking.

An EPG receiving apparatus according to the invention comprises receiving means for receiving an EPG that shows a broadcast schedule of programs; input means for input allowing of program reservation information on the EPG that has been received by the receiving means; display control means for causing information for notification of an upcoming start of the program that has been reserved by the input means to be displayed immediately before its start; and display means for displaying a picture that is indicated by the display control means.

An EPG receiving method recited according to the invention comprises a receiving step of receiving an EPG that shows a broadcast schedule of programs; an input step of allowing input of program reservation information on the EPG that has been received by the receiving step; a display control step of causing information for notification of an upcoming start of the program that has been reserved by the input step to be displayed immediately before its start; and a display step of displaying a picture that is indicated by the display control step.

A providing medium according to the invention provides a program that causes execution of a process comprising a receiving step of receiving an EPG that shows a broadcast schedule of programs; an input step of allowing input of program reservation information on the EPG that has been received by the receiving step; a display control step of causing information for notification of an upcoming start of the program that has been reserved by the input step to be displayed immediately before its start; and a display step of displaying a picture that is indicated by the display control step.

In the EPG receiving apparatus according to the invention, the receiving means receives an EPG that shows a broadcast schedule of programs, the input means allows input of program reservation information on the EPG that has been received by the receiving means, the display control means causes information for notification of an upcoming start of the program that has been reserved by the input means to be displayed immediately before its start, and the display means displays a picture that is indicated by the display control means.

In the EPG receiving method and the providing medium according to the invention, an EPG that shows a broadcast schedule of programs is received in the receiving step, program reservation information is input, in the input step, on the EPG that has been received in the receiving step, information for notification of an upcoming start of the program that has been reserved in the input step is caused to be displayed immediately before its start in the display control step, and a picture that is indicated in the display control step is displayed in the display step.

Embodiments of the invention will now be described, by way of example only, with reference to the accompanying drawings, in which:
Fig. 1 is a block diagram showing an example configuration of a transmitting apparatus to which the present invention is applied;
Fig. 2 is a block diagram showing an example configuration of a receiving apparatus to which the invention is applied;
Fig. 3 is a block diagram showing an example configuration of a display converter 47 shown in Fig. 2;
Figs. 4A and 4B illustrates how transition to an EPG picture is made;
Fig. 5 illustrates a display example of an EPG picture;
Fig. 6 is a flowchart showing an EPG display process;
Figs. 7A-7C illustrate display examples of L-shaped EPG pictures;
Figs. 8A-8C illustrate a display example of an EPG picture with a reminder function; and
Figs. 9A-9C illustrate a display example of an EPG picture with the reminder function.

Before describing below an embodiment of the present invention, to clarify a corresponding relationship between each means of the invention described in the claims and components of the following embodiment, the features of the invention will be described below in such a manner that each means is followed, in parentheses, by a corresponding element (just an example) of the embodiment. However, naturally, the following statement does not mean that each means is limited to the component following it.

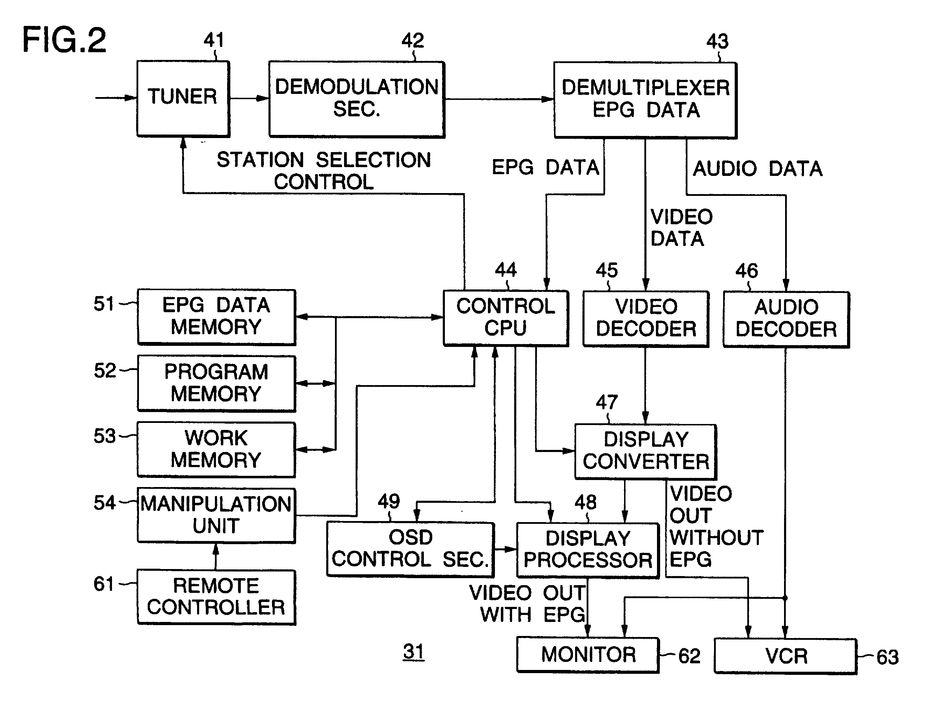

An EPG receiving apparatus according to the invention comprises receiving means (e.g., a tuner 41 shown in Fig. 2) for receiving an EPG that shows a broadcast schedule of programs; input means (e.g., a remote controller 61 shown in Fig. 2) for allowing input of program reservation information on the EPG that has been received by the receiving means; display control means (e.g., a control CPU 44 shown in Fig. 2) for causing information for notification of an upcoming start of the program that has been reserved by the input means to be displayed immediately before its start; and display means (e.g., a monitor 62 shown in Fig. 2) for displaying a picture that is indicated by the display control means.

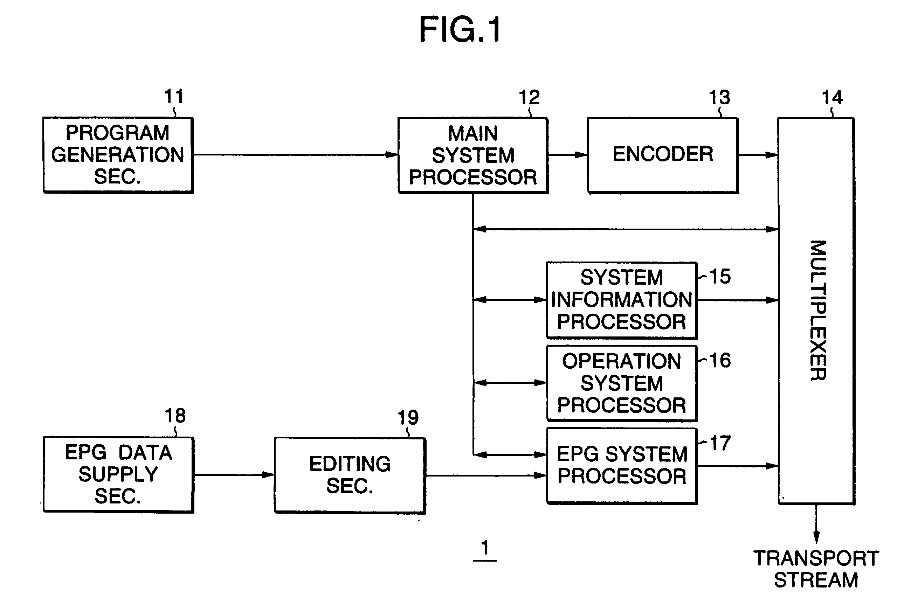

Fig. 1 shows an example configuration of an EPG transmitting apparatus according to the invention. In this EPG transmitting apparatus, a program generation section 11 generates data (audio data and video data) of a program to be broadcast. A main system processor 12 supplies the program data to an encoder 13 with program data that is supplied from the program generation section 11 and makes the encoder 13 encode the program data. Further, the main system processor 12 generates a reference clock signal, time information, etc. and supplies those to a system information processor 15, an operation system processor 16, an EPG system processor 17, a multiplexer 14, etc. The encoder 13 encodes the program data that is supplied from the program generation section 11 via the main system processor 12 according to, for example, the MPEG scheme and outputs encoded data to the multiplexer 14.

The system information processor 15 generates system information that is necessary for decoding of a transmission signal and outputs it to the multiplexer 14. The operation system processor 16 processes an instruction corresponding to an input from a keyboard, a mouse (both not shown), or the like and outputs a processing result to the main system processor 12 when necessary.

An EPG data supply section 18 generates EPG data and outputs it to an editing section 19. The editing section 19 edits the supplied EPG data. The EPG system processor 17 processes the EPG data that is supplied from the editing section 19, in synchronism with a signal that is supplied from the main system processor 12, and outputs processed data to the multiplexer 14. The multiplexer 14 combines the program data (audio data and video data) that is supplied from the encoder 13 and the EPG data that is supplied from the EPG system processor 17 into a transport stream, and transmits it to a satellite (not shown).

Fig. 2 shows an example configuration of an EPG receiving apparatus for receiving data that is transmitted from the EPG transmitting apparatus of Fig. 1 via a satellite. The EPG receiving apparatus receives, with a tuner 41, radio waves that are transmitted from the satellite and outputs a reception signal to a demodulation section 42. The demodulation section 42 demodulates the signal supplied from the tuner 41 and outputs a demodulation signal to a demultiplexer 43. The demultiplexer 43 extracts not only audio data and video data that constitute program data but also EPG data from the data that is input from the demodulation section 42. The demultiplexer 43 supplies the audio data to an audio decoder 46, the video data to a video decoder 45, and the EPG data to a control CPU 44.

The audio decoder 46 decodes the received audio data and outputs decoded data to, for example, a VCR (video cassette recorder) 63 and a monitor 62 that are connected to the receiving apparatus. The video decoder 45 decodes the received video data and outputs decoded data to a display converter 47. The display converter 47 reduces the size of a picture that is based on the video data supplied from the video decoder 45 to a prescribed size in accordance with a control of the control CPU 44, and outputs resulting data to a display processor 48. The display converter 47 also outputs a video data signal that has not been subjected to picture size reduction to the VCR 63.

Controlled by the control CPU 44, an OSD control section 49 generates OSD (on-screen display) data to be superimposed on video data and outputs it to the display processor 48. Controlled by the control CPU 44, the display processor 48 combines the OSD data that is supplied from the OSD control section 49 with the video data that is supplied from the display converter 47, and outputs resulting data to the monitor 62.

An EPG data memory 51 stores the EPG data that has been supplied from the demultiplexer 43 to the control CPU 44. A program memory 52 stores programs that are necessary for the control CPU 44 to execute various processes. A work memory 53 stores data, programs, etc. that are necessary for the control CPU 44 to execute various processes. A manipulation unit 54 captures an infrared signal that is input from a remote controller 61 and an input from buttons, switches, and the like (not shown) that are provided on the main body of the receiving apparatus, and outputs a resulting detection signal to the control CPU 44.

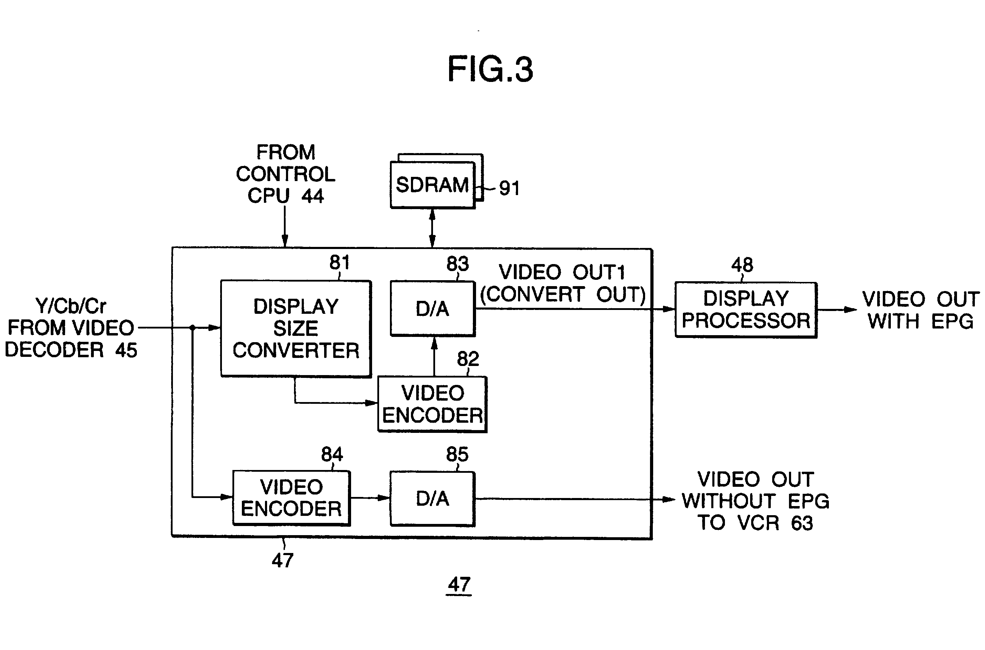

Fig. 3 shows an example configuration of the display converter 47. A display size converter 81 reduces the size of one picture that is formed by a luminance signal Y and color difference signals Cb (B - Y) and Cr (R - Y) that are supplied from the video decoder 45 to a prescribed size in accordance with an instruction that is supplied from the control CPU 44, and outputs resulting data to a video encoder 82. The video encoder 82 converts the video data that is input from the display size converter 81 to video data of, for example, the NTSC scheme and outputs it to a D/A converter 83. The D/A converter 83 D/A-converts the received video data and outputs resulting data to the display processor 48. The display processor 48 processes the received video data, combines it with symbols (figures) corresponding to the EPG that is supplied from the OSD control section 49 as described above, and outputs resulting data to the monitor 62.

On the other hand, the video data that is input from the video decoder 45 is converted to video data of the NTSC scheme by a video encoder 84, converted to an analog signal by a D/A converter 85, and then supplied to the VCR 63. This video signal supplied to the VCR 63 is a video signal not including an EPG because it does not pass through the display processor 48.

An SDRAM 91 is also connected to the display converter 47. The SDRAM 91 is a memory for temporarily storing picture data when the display size converter 81 changes the display size.

Next, the operations of the above apparatuses will be described. Program data that has been generated by the program generation section 11 is supplied to the encoder 13 via the main system processor 12 and encoded there. On the other hand, the EPG data supply section 18 generates EPG data of broadcast-scheduled programs of, for example, two weeks and outputs it to the editing section 19. The editing section 19 executes an editing process on the EPG data.

The EPG system processor 17 processes the EPG data that is supplied from the editing section 19 so that it will comply with a predetermined format and outputs processed data to the multiplexer 14.

The multiplexer 14 packetizes each of the program data that is supplied from the encoder 13 and the EPG data that is supplied from the EPG system processor 17, combines packetized data into a transport stream, and transmits it to a satellite.

In the receiving apparatus, the control CPU 44 controls the tuner 41 in accordance with an instruction from the remote controller 61 or the manipulation unit 54, to receive a signal coming from a prescribed transponder of the satellite. The demodulation section 42 demodulates a signal that is output from the tuner 41 and outputs a demodulation signal to the demultiplexer 43. The demultiplexer 43 extracts audio data, video data, and EPG data from the data that is supplied from the demodulation section 42, and outputs those data to the audio decoder 46, the video decoder 45, and the control CPU 44, respectively.

The audio decoder 46 decodes packets of the received audio data and outputs decoded data to the VCR 63 and the monitor 62. The video decoder 45 decodes packets of the received video data and outputs decoded data to the display converter 47.

The display size converter 81 of the display converter 47 stores the received video data in the SDRAM 91 and executes a process of changing the display size to a size corresponding to an instruction that is supplied from the control CPU 44. Video data whose size has been converted to the prescribed display size is converted to video data of the NTSC scheme by the video encoder 82, D/A-converted by the D/A converter 83, and then input to the display processor 48.

The video encoder 84 of the display converter 47 encodes the video data that is input from the video decoder 45 into video data of the NTSC scheme without changing the display size, and outputs it to the D/A converter 85. The D/A converter 85 D/A-converts the received video data and outputs resulting data to the VCR 63.

The control CPU 44 stores, in the EPG data memory 51, the EPG data that is supplied from the demultiplexer 43.

When receiving a prescribed instruction from the remote controller 61 or the manipulation unit 54, the control CPU 44 reads out the EPG data that is stored in the EPG data memory 51 and outputs read-out data to the OSD control section 49. The OSD control section 49 converts the received EPG data to picture data and outputs it to the display processor 48. The display processor 48 outputs the picture data that is supplied from the OSD control section 49 to the monitor 62 singly or after superimposing it on the video picture data that is supplied from the display converter 47. As a result, an EPG picture is displayed on the monitor 62.

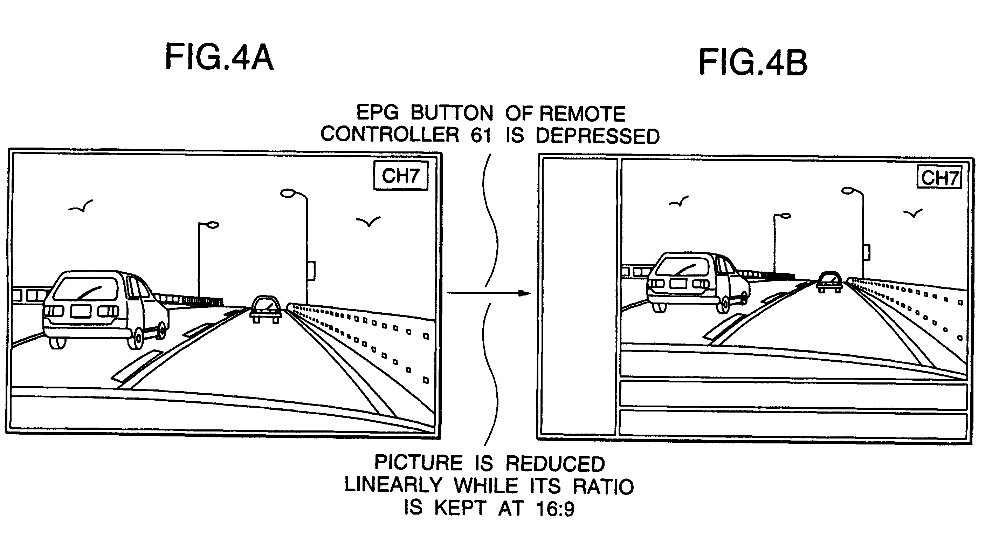

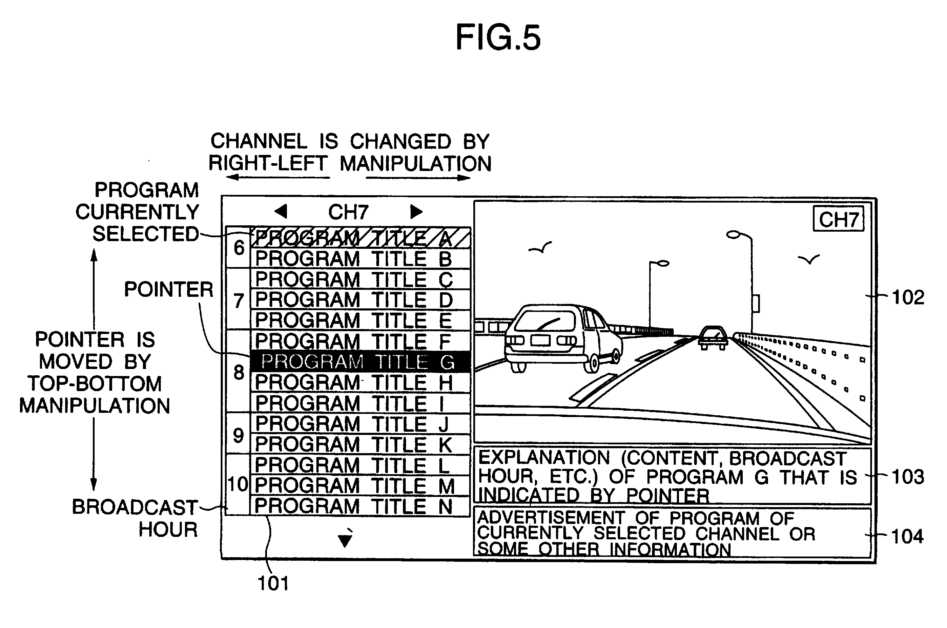

Upon depression of an EPG button of the remote controller 61, an L-shaped EPG shown in Fig. 4B, for example, is displayed on the monitor 62 by the above operation. Fig. 4A shows a monitor picture before depression of the EPG button, and Fig. 4B shows a monitor picture after depression of the EPG button. Fig. 5 is a more specific illustration of Fig. 4B. In this example, an EPG is displayed on the left side in L-shaped form and a reduced picture 102 is displayed in a top-right area. This picture reduction process is executed by the display size converter 81 of the display converter 47.

A program table of a channel currently selected (in this example, CH7) is displayed in an EPG display area 101. Numerals 6 to 10 on the left side in the program table represent broadcast hours. When necessary, the channel number at the top of the program table can be changed by a right-left manipulation on a decision button of the remote controller 61. Further, a program whose content, broadcast hour, etc. a viewer wants to check can be selected by moving a pointer (indicated in black in Fig. 5) by a top-bottom manipulation on the decision button of the remote controller 61.

An explanation of a program indicated by the pointer in the EPG display area 101 is displayed in a display area 103 under the program picture 102. Further, an advertisement of, for example, a program to be broadcast in the future on the channel currently selected is displayed in a display area 104 under the display area 103.

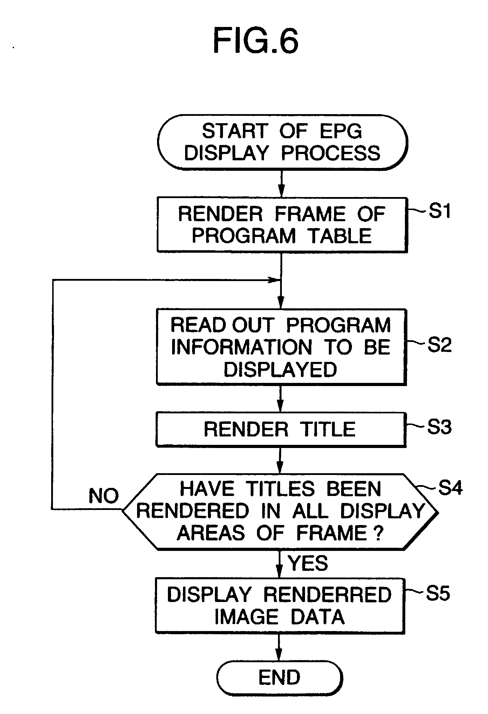

Next, a description will be made of a process that is executed by the control CPU 44 in displaying an EPG as shown in Fig. 5 on the monitor 62 with reference to a flowchart of Fig. 6 (alternatively, it is possible to make the OSD control section 49 execute this process). First, at step S1, the control CPU 44 renders an EPG frame as shown in Fig. 5 on a VRAM (not shown) of the OSD control section 49. Then, the process goes to step S2, where the control CPU 44 reads program information to be displayed from the EPG data memory 51. At step S3, the control CPU 44 renders the title of the program that has been read out at step S2 on the built-in VRAM of the OSD control section 49 at a position corresponding to its broadcast hour.

Then, at step S4, it is judged whether titles have been rendered in all the display areas of the frame. If there remains a display area where a title is not rendered, the process returns to step S2 to repeatedly execute step S2 and the subsequent steps. If it is judged at step S4 that titles have been rendered in all the display areas of the frame, the process goes to step S5, where the control CPU 44 controls the OSD control section 49 to read out the picture data that has been rendered on the VRAM, and output it to the monitor 62 via the display processor 48 and display it thereon. As a result, an EPG as shown in Fig. 5 is displayed on the monitor 62.

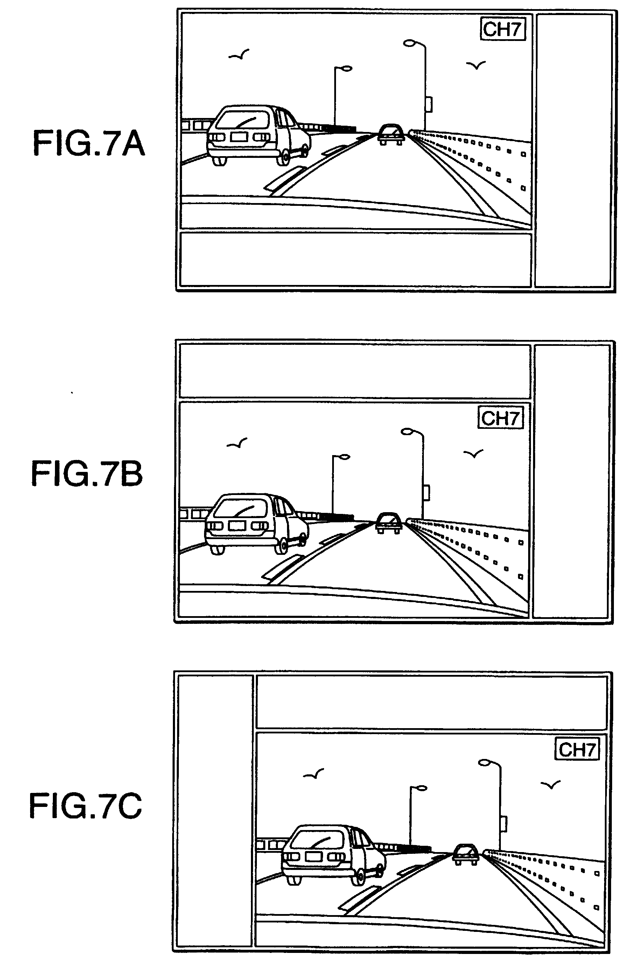

Figs. 7A-7C show other possible manners of displaying an L-shaped EPG than the manner shown in Fig. 5.

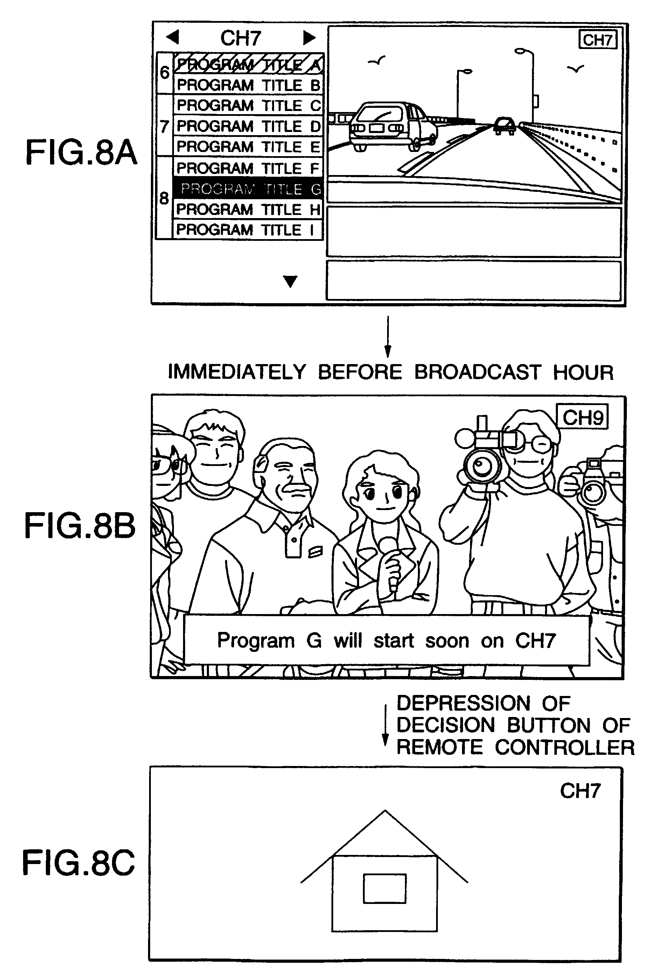

Figs. 8A-8C show an example EPG picture having a reminder (viewing reservation) function. A series of operations of viewing reservation will be described. A viewer selects a program to be reserved from the EPG and depresses the decision button of the remote controller 61. In this example, program G is reserved (see Fig. 8A). Then, if the viewer is viewing a program on a different channel (CH9), the reminder function operates immediately before the broadcast hour of the reserved program, whereby a message to the effect that the broadcast hour of the reserved program is coming is displayed in the bottom area of the screen (see Fig. 8B). If the viewer wants to view the reserved program, he depresses the decision button of the remote controller 61, whereupon switching is made to a picture of the reserved program.

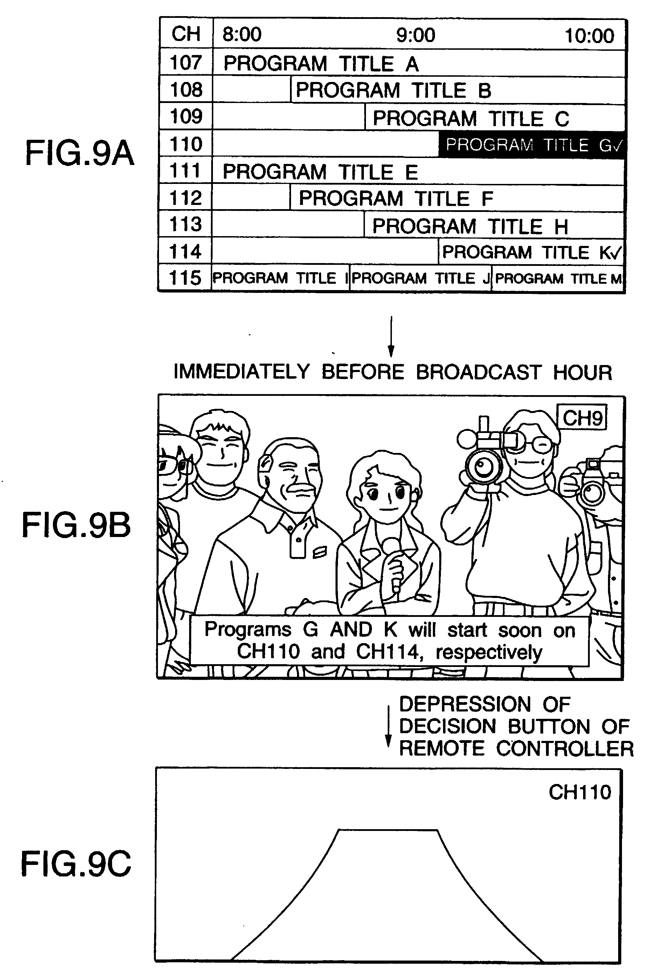

Figs. 9A-9C show an example EPG picture of a case where a plurality of viewing reservations are made. A viewer selects a plurality of programs to be reserved from the EPG and depresses the decision button of the remote controller 61. In this example, programs G and K are reserved (see Fig. 9A). Then, if the viewer is viewing a program on a different channel (CH9), the reminder function operates immediately before the broadcast hour of the reserved programs, whereby a message to the effect that the broadcast hours of the reserved programs are coming is displayed in the bottom area of the screen (see Fig. 9B). If the viewer wants to view the reserved programs, he depresses the decision button of the remote controller 61, whereupon switching is made to a picture of the first reserved program.

Although the embodiment is directed to the case where a signal is transmitted from the transmitting apparatus to the receiving apparatus via a satellite, the invention can also be applied to cases where a signal is transmitted by ground waves or via a cable of CATV or the like.

In the invention, the term "system" means the entire apparatus that is constituted of a plurality of apparatuses, means, etc.

In this specification, the providing medium that provides users with a computer program for execution of the above process includes not only information recording media such as a magnetic disk and a CD-ROM but also network transmission media such as the Internet and a digital broadcast satellite.

As described above, in the EPG receiving apparatus, the EPG receiving method, and the providing medium according to the invention, a viewer is informed of an upcoming start of broadcast of a reserved program immediately before its start. Therefore, the viewer can judge whether to make channel switching.

## Claims

1. An EPG receiving apparatus comprising:
receiving means for receiving an EPG that shows a broadcast schedule of programs;
input means for allowing input of program reservation information on the EPG that has been received by the receiving means;
display control means for causing information for notification of an upcoming start of a program that has been reserved by the input means to be displayed immediately before its start; and
display means for displaying a picture that is indicated by the display control means.

2. The EPG receiving apparatus according to claim 1, wherein the display control means causes information for notification of upcoming starts of a plurality of reserved programs.

3. The EPG receiving apparatus according to claim 2, wherein said information for notification of the upcoming start of each of a plurality of reserved programs is displayed simultaneously.

4. An EPG receiving method comprising:
a receiving step of receiving an EPG that shows a broadcast schedule of programs;
an input step of allowing input of program reservation information on the EPG that has been received by the receiving step;
a display control step of causing information for notification of an upcoming start of a program that has been reserved by the input step to be displayed immediately before its start; and
a display step of displaying a picture that is indicated by the display control step.

5. A providing medium characterized by providing a program that causes execution of a process comprising:
a receiving step of receiving an EPG that shows a broadcast schedule of programs;
an input step of allowing input of program reservation information on the EPG that has been received by the receiving step;
a display control step of causing information for notification of an upcoming start of the program that has been reserved by the input step to be displayed immediately before its start; and
a display step of displaying a picture that is indicated by the display control step.

6. An EPG receiving method according to claim 4 or a providing medium according to claim 5, wherein information for notification of the upcoming starts of a plurality of reserved programs is caused to be displayed at said display control step.

7. A method or medium according to claim 6,
wherein said information for notification of the upcoming start of each of a plurality of reserved programs is displayed simultaneously.
